(19) Europäisches Patentamt
European Patent Office
Office européen des brevets

(11) Veröffentlichungsnummer: **0 094 540 B1**

# (12) EUROPÄISCHE PATENTSCHRIFT

(45) Veröffentlichungstag der Patentschrift: **12.03.86**

(51) Int. Cl.⁴: **C 07 F 9/20**

(21) Anmeldenummer: **83104271.8**

(22) Anmeldetag: **02.05.83**

(54) **Zusatz von Phosphortrichlorid zu Chlorierungs-Gemischen zur Bildung von Thiophosphoryltrichlorid.**

(30) Priorität: **13.05.82 US 377880**

(43) Veröffentlichungstag der Anmeldung: **23.11.83 Patentblatt 83/47**

(45) Bekanntmachung des Hinweises auf die Patenterteilung: **12.03.86 Patentblatt 86/11**

(84) Benannte Vertragsstaaten: **BE CH DE FR GB IT LI**

(56) Entgegenhaltungen:
**EP-A-0 001 687**
**EP-A-0 048 172**
**DE-B-1 801 432**
**DE-C-1 104 501**
**US-A-3 089 890**

(73) Patentinhaber: **Mobay Chemical Corporation, Penn Lincoln Parkway West, Pittsburgh, Pennsylvania 15205 (US)**

(72) Erfinder: **Earnest, Steven E., 7041 N. Bales Apt. 113, Gladstone Missouri 64119 (US)**

(74) Vertreter: **Schumacher, Günter, Dr. et al, c/o Bayer AG Konzernverwaltung RP Patentabteilung, D-5090 Leverkusen 1 Bayerwerk (DE)**

EP 0 094 540 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Verbesserungen der Verarbeitung der Reaktionsmischungen, die bei der Chlorierung von O,O-Dialkylphosphoro-dithio-säuren und deren Derivaten erhalten werden.

Es ist bekannt, verschiedenartige, als Insektizide wirksame O,O-Dialkyl-S-aryl-dithiophosphorsäureester durch Reaktion von O,O-Dialkylthiophosphorsäurechlorid mit Alkalimetallphenolaten herzustellen, z. B. mit Natrium-p-nitrophenolat, wodurch das bekannte Insektizid O,O-Diethyl-S-p-nitrophenyl-dithiophosphorsäureester hergestellt wird.

Die O,O-Dialkylthiophosphorsäurechlorid-Ausgangsmaterialien werden in grossen Mengen durch Chlorierung von O,O-Dialkyldithiophosphorsäureestern, deren Salzen sowie Derivaten derselben wie Bis-sulfiden hergestellt. Wie in der US-PS Nr. 3089890 beschrieben ist, werden die Diester-chloride technisch durch verschiedene.

Verfahren gewonnen, z. B. durch Chlorierung (vorzugsweise in einem wasserfreien System und entweder in Anwesenheit oder in Abwesenheit eines inerten organischen Lösungsmittels) entweder 1 eines Bis(thiophosphono)sulfids der Struktur

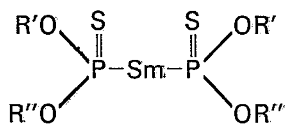

in der m eine ganze Zahl bezeichnet, jedoch gewöhnlich 2 ist, oder 2 einer Dithiophosphor-Verbindung (die die Vorstufe von 1 sein kann) der Struktur

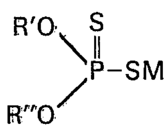

in der M für Wasserstoff oder ein Alkalimetall (z. B. Natrium oder Kalium), jedoch gewöhnlich für Wasserstoff, steht, wobei als Chlorierungsmittel Chlor oder Schwefeldichlorid oder Schwefelmonochlorid oder Sulfurylchlorid, jedoch gewöhnlich Chlor, eingesetzt werden. Die verschiedenen angewandten technischen Verfahren werden durch die folgenden Schemata erläutert, in denen M Wasserstoff oder ein Alkalimetall bezeichnet und X für die Gruppierung

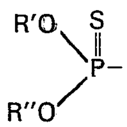

steht.

$$2\,XSM \begin{cases} +3\,Cl_2 & \rightarrow 2\,XCl+2\,MCl+S_2Cl_2 \\ +2\,Cl_2 & \rightarrow 2\,XCl+2\,MCl+2\,S \\ +2\,S_2Cl_2 & \rightarrow 2\,XCl+2\,MCl+6\,S \\ +2\,SCl_2 & \rightarrow 2\,XCl+2\,MCl+2\,S \\ +6\,SCl_2 & \rightarrow 2\,XCl+2\,MCl+4\,S_2Cl_2 \\ +2\,SO_2Cl_2 & \rightarrow 2\,XCl+2\,MCl+2\,S+2\,SO_2 \end{cases}$$

$$2\,XSM \begin{cases} +Cl_2 & \rightarrow (X)_2S_2+2\,MCl \\ +S_2Cl_2 & \rightarrow (X)_2S_4+2\,MCl \\ +2\,Cl_2 & \rightarrow (X)_2S_2+2\,MCl+S_2Cl_2 \\ +SO_2Cl_2 & \rightarrow (X)_2S_3+2\,MCl+SO_2 \end{cases}$$

$$(X)_2S_2 \begin{cases} +2\,Cl_2 & \rightarrow 2\,XCl+S_2Cl_2 \\ +Cl_2 & \rightarrow 2\,XCl+2\,S \\ +S_2Cl_2 & \rightarrow 2\,XCl+4\,S \\ +4\,SCl_2 & \rightarrow 2\,XCl+3\,S_2Cl_2 \\ +SO_2Cl_2 & \rightarrow 2\,XCl+2\,S+SO_2 \\ +2\,SO_2Cl_2 & \rightarrow 2\,XCl+S_2Cl_3+2\,SO_2 \end{cases}$$

$$(X)_2S_3 \quad +S_2Cl_2 \rightarrow 2\,XCl+5\,S$$
$$(X)_2S_4 \quad +S_2Cl_2 \rightarrow 2\,XCl+6\,S$$

Jedoch verlaufen diese Reaktionen nicht so einfach, wie sie oben formuliert sind, da eine Mannigfaltigkeit von Nebenprodukten in wechselnden Mengen, je nach den Reaktionsbedingungen und den Reaktionspartnern, gebildet werden, z. B. in Abhängigkeit von der Art und der Menge des Chlorierungsmittels, aber auch von der Reinheit der der Chlorierung unterworfenen Thiophosphor-Verbindung.

Die US-PS Nr. 3897523 bezieht sich auf die US-PS Nr. 3089890 und offenbart eine Methode zur Durchführung der Reaktion, bei der eine Produkt-Mischung gebildet wird, die eine Dünnschicht-Verdampfung zur Abtrennung des angestrebten Produkts erfordert.

Die DE-OS Nr. 2538310 betrifft ein ähnliches Verfahren, bei dem ausgefällter Schwefel anfällt, und bezieht sich auf ein noch älteres Verfahren, das in der DE-PS Nr. 1801432 offenbart ist.

Das Schwefelmonochlorid-Nebenprodukt, das bei verschiedenen der Verfahren entsteht, zersetzt sich beim Stehen der Reaktionsmischung unter Freisetzung von festem Schwefel. Dieser Schwefel wird von der Mischung mitgeführt, agglomeriert zu weichen Klumpen, die das System verstopfen, und stört die Destillation des angestrebten Esterchlorids.

Dementsprechend ist es ein Ziel der vorliegenden Erfindung, das Schwefelmonochlorid aus einem Chlorierungsprodukt der beschriebenen Art zu eliminieren und dadurch die Abscheidung von festem Schwefel zu vermeiden.

Dieses Ziel wird neben weiteren Vorteilen beim erfindungsgemässen Verfahren erreicht, indem das rohe Gemisch der Chlorierungsprodukte der beschriebenen Art mit Phosphortrichlorid in Berührung gebracht wird. Dadurch wird Schwefel, der vorhanden ist oder sich bildet, in Thiophosphorylchlorid überführt, und unumgesetztes Ausgangsmaterial in eine zusätzliche Menge des angestrebten Produkts umgewandelt, d. h. die ursprüngliche Chlorierung wird zu einem grösseren Umsatz weitergeführt. Danach werden das Thiophosphorylchlorid und das O,O-Dialkyl-thiophosphorsäureesterchlorid voneinander und von anderen Komponenten der Reaktionsmischung durch Destillation getrennt.

Die vorliegende Erfindung betrifft somit ein neues Verfahren zur Herstellung eines O,O-Dialkyl-phosphorothiosäurechlorids der Formel I:

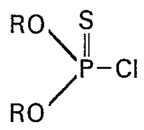

(I)

in der R für Alkyl steht,
durch Reaktion eines Chlorierungsmittels mit einem Bis(thiophosphono)sulfid der Formel II:

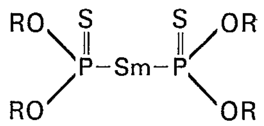

(II)

in der m eine ganze Zahl bezeichnet,
oder mit einer Dithiophosphoro-Verbindung der Formel III:

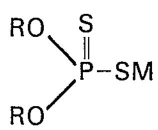

(III)

in der M für ein Wasserstoffatom oder ein Alkalimetall steht (wodurch eine Mischung erzeugt wird, die das angestrebte Säurechlorid, etwas unumgesetztes Ausgangsmaterial sowie Nebenprodukte, darunter Schwefelmonochlorid enthält) und Abtrennung des Säurechlorids der Formel I aus der entstandenen Mischung, welches dadurch gekennzeichnet ist, dass die Mischung vor der Abtrennung des Säurechlorids der Formel I mitmindestens der stöchiometrischen Menge Phosphortrichlorid, bezogen auf ein der Mischung vorhandenes Schwefelmonochlorid, behandelt wird, wodurch ein Teil des unumgesetzten Ausgangsmaterials zusätzlich in das angestrebte Säurechlorid überführt wird und ein Teil des Schwefelmonochlorids in Thiophosphorylchlorid umgewandelt wird, und dass das dabei entstandene Thiophosphorylchlorid abdestilliert wird, wodurch ein Ausfallen von festem Schwefel vermieden wird, wie es beim Stehen von Schwefelmonochlorid stattfindet.

Die zu Beginn der Reaktion vorzunehmende Chlorierung kann in bekannter Weise mit jedem der oben genannten Chlorierungsmittel durchgeführt werden, z. B. mit Schwefelchloriden oder Sulfurylchlorid, vorzugsweise mit Chlor. Mit Vorteil wird das Chlorierungsmittel in annähernd stöchiometrischer Menge eingesetzt, obwohl auch ein Überschuss verwendet werden kann, um die Reaktion zu vollständigem Umsatz zu bringen.

Die Alkyl-Reste der Ausgangs-O,O-Dialkyldithiophosphorsäure oder ihrer Derivate besitzen vorzugsweise 1 bis 4 Kohlenstoff-Atome, wobei die O,O-Dimethyl- und O,O-Diethyl-Verbindungen besonders bevorzugt werden.

In Formel II steht m vorzugsweise für eine ganze Zahl von 1 bis 4, insbesondere 1 oder 2, besonders bevorzugt für 2.

M als Alkalimetall in Formel III bedeutet vorzugsweise Natrium oder Kalium. Vorzugsweise steht M für Wasserstoff.

Dem Chlorierungsgemisch wird Phosphortrichlorid zugesetzt. Die Dauer und die Temperatur der Reaktion können innerhalb eines breiten Rahmens variiert werden (Temperaturen von 5 bis 70°C werden bevorzugt, und Temperaturen von 8 bis 55°C werden besonders bevorzugt), jedoch sind zur Sicherstellung einer vollständigen Umsetzung mindestens etwa 30 min bei Raumtemperatur und vorzugsweise mindestens etwa 1 h bei etwa 50°C nach beendeter Zugabe des Phosphortrichlorids erstrebenswert. Das Phosphortrichlorid wird in wenigstens stöchiometrischer Menge, bezogen auf den Gehalt an Schwefelmonochlorid, gemäss der nachstehenden Gleichung, zugesetzt:

$$2\ PCl_3 + S_2Cl_2 \rightarrow 2\ PSCl_3 + Cl_2$$

Auf diese Weise erzeugt das Phosphortrichlorid, neben der Befreiung der Reaktionsmischung von Schwefelmonochlorid, zusätzliches Chlor zur Vervollständigung der Chlorierung von etwaigem unumgesetzten Ausgangsmaterial, das in dem Produkt noch vorhanden ist. Der Schwefelmonochlorid-Gehalt kann mittels Analyse in üblicher Weise bestimmt werden. Er kann etwa 2 bis 17 Gew.-%, günstigenfalls etwa 2 bis 4 Gew.-%, der Reaktionsmischung der Chlorierung betragen, ausschliesslich eines etwa eingesetzten Lösungsmittels (obwohl vorzugsweise kein derartiges Lösungsmittel eingesetzt wird). Vorteilhafterweise wird des Phosphortrichlorid in Form eines etwa 2- bis 10-proz. Überschusses eingesetzt.

Das Reaktionsprodukt wird zur Isolierung des angestrebten Produkts und des Thiophosphorylchlorids destilliert, wobei ein etwaiger Destillationsrückstand aus unumgesetztem Phosphortrichlorid, Thiophosphorylchlorid und Diesterchlorid inden nächsten Reaktionscyclus überführt wird.

Die vorliegende Erfindung wird durch die folgenden erläuternden Beispiele näher beschrieben, in denen, sofern nicht anders angegeben, sämtliche Angaben von «Teilen» sich auf Gewichtsteile beziehen.

*Beispiel 1:*

a) Zu 200 g einer rohen Chlorierungs-Mischung, die O,O-Dimethyl-thiophosphorsäurechlorid und 4 Gew.-% Schwefelmonochlorid enthält und wie in Beispiel 4 der US-PS Nr. 3089890 oder der US-PS Nr. 3897523 hergestellt worden war, werden bei 10°C 142,5 g Phosphortrichlorid hinzugefügt, und die Mischung wird 10 min bei 10°C gerührt. Die Mischung wird dann für eine Heizdauer von 60 min auf 50°C erhitzt. Nach Beendigung des Kochens wird die Mischung unter einem Vakuum von 4 bis 6,67 mbar (3 bis 5 mm Hg) und einer maximalen Blasen-Temperatur von 75°C roh destilliert, wobei ein Destillationsrückstand verbleibt, der der nächsten Charge zugechlagen wird. Die durchschnittliche Destillat-Menge beträgt 325,5 g bei einer Destillat-Zusammensetzung von 47% $PSCl_3$ und 46% O,O-Dimethylthiophosphorylchlorid.

b) 651 g des Roh-Destillats aus a) werden in einen 1 l-Kolben gegeben, der mit einer Fraktionier-Kolonne versehen ist, die ein mit 6 mm-Berl-Sattel-Körpern gepacktes Teilstück der Abmessungen 228,6 mm × 31,8 mm (9″ × 1,25″) aufwies. Bei einem Druck von 10,67 bis 13,33 mbar (8 bis 10 mm Hg) und einem Rückflussverhältnis von 1:1 wird das $PSCl_3$ entfernt. Die Blasen-Temperatur erreicht 62°C bei einer Kopf-Temperatur von 24°C. Nach der Entfernung des $PSCl_3$ kann das O,O-Dimethylthiophosphorylchlorid isoliert werden:

i) entweder durch Fortsetzung der Destillation,

ii) oder durch Entfernen des Vakuums, Waschen des Rückstands in üblicher Weise und anschliessende Abtrennung und Destillation, wodurch das Endprodukt erhalten wird.

Typische Ausbeuten für das letztere Verfahren sind 269 g $PSCl_3$, das etwa 3,2% des Diesterchlorids enthält, und 291 g O,O-Dimethylthiophosphorylchlorid (Reinheit 98,0%). Dies bedeutet eine Ausbeute von 88,1% unter Annahme einer 100-proz. Reinheit des eingesetzten O,O-Dimethyl-dithiophosphorsäureesters.

*Beispiel 2:*

a) 219,5 g eines Chlorierungs-Produkts, das O,O-Diethylthiophosphorsäurediesterchlorid und 4 Gew.-% Schwefelmonochlorid (wie in Beispiel 1-a) enthält, werden mit 150 g Phosphortrichlorid vermischt und 10 min bei 10°C gerührt. Die Mischung wird dann für eine Heizdauer von 60 min auf 50°C erhitzt und anschliessend bei 4 bis 6,67 mbar (3 bis 5 mm Hg) und einer maximalen Blasen-Temperatur von 90°C roh destilliert. Wie in Beispiel 1-b wurde der Destillationsrükstand der Roh-Destillation in die nachfolgenden Chargen zurückgeführt. Die durchschnittliche Menge des Roh-Destillats beträgt 343,5 g bei Gehalten von 36,2% $PSCl_3$ und 52,6% O,O-Diethylthiophosphorylchlorid.

b) In der gleichen Apparatur und unter den gleichen Bedingungen wie in Beispiel 1-b werden das $PSCl_3$ entfernt und das O,O-Diethylthiophosphorylchlorid gereinigt. Die typische Ausbeute beträgt 261,2 g $PSCl_3$ mit einem Gehalt von 1% des Diesterchlorids und 348,1 g (Reinheit 98,5%) O,O-Diethylthiophosphorylchlorid. Dies ergibt eine effektive Ausbeute von 90,9%, bezogen auf ein zu 100% reines Ausgangsmaterial.

## Patentansprüche

1. Verfahren zur Herstellung eines O,O-Dialkylphosphorothiosäurechlorids der Formel (I):

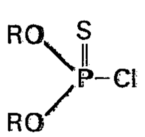

(I)

in der R für Alkyl steht, durch Reaktion eines Chlorierungsmittels mit einem Bis(thiophosphono)sulfid der Formel (II):

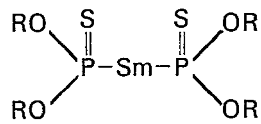

(II)

in der m eine ganze Zahl bezeichnet, oder mit einer Dithiophosphoro-Verbindung der Formel (III):

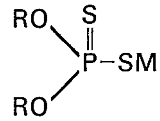

(III)

in der M für ein Wasserstoffatom oder ein Alkalimetall steht, und Abtrennung des Säurechlorids der Formel (I) aus der entstandenen Mischung, dadurch gekennzeichnet, dass die Mischung vor der Abtrennung des Säurechlorids der Formel (I) mit mindestens der stöchiometrischen Menge Phosphortrichlorid, bezogen auf in der Mischung vorhandenes Schwefelmonochlorid behandelt wird, und dass das dabei gebildete Thiophosphorylchlorid abdestilliert wird.

2. Verfahren nach Anspruch 1, dadurch gekennzeichnet, dass das Phosphortrichlorid in mindestens der doppelten Stoffmenge («molaren Menge») des als $S_2Cl_2$ berechneten Schwefelmonochlorids eingesetzt wird.

3. Verfahren nach Anspruch 2, dadurch gekennzeichnet, dass R Methyl oder Ethyl ist, als Ausgangsmaterial eine O,O-Dialkyldithiophosphorsäure der Formel (III) gemäss Anspruch 1, in welcher M für ein Wasserstoffatom steht, eingesetzt wird und als Chlorierungsmittel Chlor verwendet wird.

## Claims

1. Process for the preparation of an O,O-dialkylphosphorothioacid chloride of the Formula (I):

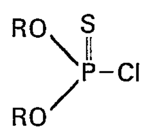

(I)

in which R represents alkyl, by reacting a chlorinating agent with a bis(thiophosphono)sulphide of the general Formula (II):

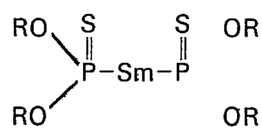

(II)

in which m denotes an integer, or with a dithiophosphoro compound of the Formula (III):

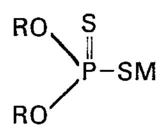

(III)

in which M represents a hydrogen atom or an alkali metal,
and isolation of the acid chloride of the Formula (I) from the resulting mixture, characterised in that before isolation of the acid chloride of the Formula (I) the mixture is treated with at least the stoichiometric amount of phosphorus trichloride, relative to sulphur monochloride present in the mixture, and that the thiophosphoryl chloride thereby formed is distilled off.

2. Process according to Claim 1, characterised in that the phosphorus trichloride is employed in at least twice the amount of material (molar amount) of the sulphur monochloride, calculated as $S_2Cl_2$.

3. Process according to Claim 2, characterised in that R is methyl or ethyl, that the starting material used is an O,O-dialkyldithiophosphoric acid of the Formula (III) according to Claim 1, in which M represents a hydrogen atom, and that the chlorinating agent used is chlorine.

## Revendications

1. Procédé de préparation d'un chlorure d'acide O,O-dialkylphosphorothioïque de formule (I):

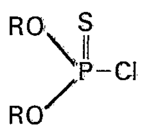

(I)

dans laquelle R représente un groupe alkyle, par réaction d'un agent chlorant avec un bis(thiophosphono)sulfure de formule (II):

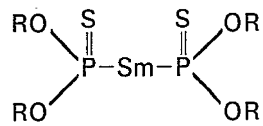

(II)

dans laquelle m représente un nombre entier, ou avec un composé dithiophosphoré de formule (III):

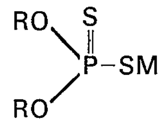

(III)

dans laquelle M représente un atome d'hydrogène ou un métal alcalin, et séparation du chlorure d'acide de formule (I) à partir du mélange obtenu, caractérisé en ce que l'on traite le mélange, avant la séparation du chlorure d'acide de formule (I), par la quantité au moins stœchiométrique de trichlorure de phosphore, par rapport au monochlorure de soufre présent dans le mélange, et on distille le chlorure de thiophosphoryle formé dans ces conditions.

2. Procédé selon la revendication 1, caractérisé en ce que l'on utilise le trichlorure de phosphore en quantité au moins double (quantité molaire) de la quantité de monochlorure de soufre exprimée en $S_2Cl_2$.

3. Procédé selon la revendication 2, caractérisé en ce que R représente un groupe méthyle ou éthyle, en ce que l'on utilise en tant que produit de départ un acide O,O-dialkyldithiophosphorique de formule (III) de la revendication 1, dans laquelle M représente un atome d'hydrogène, et en ce que l'on utilise le chlore en tant qu'agent chlorant.